# EUROPEAN PATENT SPECIFICATION

(11) **EP 2 825 022 B1**
(45) Date of publication and mention of the grant of the patent: **05.04.2017**
(21) Application number: 13761381.6
(22) Date of filing: 26.02.2013
(51) Int. Cl.: A01G 23/083, A01G 23/085, A01G 23/00

(54) **MOBILE LOADING SYSTEM FOR FOREST HARVESTER**
MOBILES LADESYSTEM FÜR EINE FORSTWIRTSCHAFTLICHE ERNTEMASCHINE
SYSTÈME DE CHARGEMENT MOBILE POUR ENGIN D'ABATTAGE FORESTIER

(30) Priority: 15.03.2012 SE 1250243
(43) Date of publication of application: 21.01.2015
(73) Proprietor: JLO Development AB, 903 21 Umeå (SE)
(72) Inventor: OLOFSSON, Lennart, 903 21 Umeå (SE); LINDBERG, Erik, 915 98 Bygdeå (SE)
(74) Representative: Zacco Sweden AB
(86) International application number: PCT/SE2013/050174
(87) International publication number: WO 2013/137801

(56) References cited:
- WO-A1-2010/002349
- SE-B- 367 945
- US-A- 3 812 892
- US-A- 3 868 982

## Description

The present invention concerns a mobile loading system for forest harvesters according to the introduction to claim 1. The invention includes also a loading procedure for a harvester according to claim 12.

During forestry at small scale, and in particular during thinning, harvesters that can be suspended from a crane arm of a terrain-going vehicle have begun to be used in recent times to an ever-greater extent, such as a forwarder, in order to take care of not only felling but also trimming and cutting, together with, where relevant, the loading of tree trunks into a load carrier that is a part of the work machine, in the form of, for example, a truck provided with a load compartment. This work has traditionally been carried out by two different types of machine, known as "harvesters" and "forwarders", whereby the harvester processes the trees and places the timber on the ground, after which the forwarder progresses through the forestry stand and carries out the loading and transport of the timber. Instead of the combination harvester-forwarder, it may be advantageous to use direct loading of timber in order to avoid the stage of the timber being placed on the ground before it is collected by the forwarder. One example of such a machine is a combined machine known as a "harwarder" (a portmanteau word that combines "harvester" and "forwarder"), which is provided with a load compartment that can be rotated and tilted and whose position can be adapted in such a manner that the timber gripper of the harvester, which is a component of the harvester head, can be used for the loading of timber. The rotation action, however, requires a certain degree of free space around the load of timber and that the harvester crane that is normally freely swinging has free space available, which is not normally the case, in particular when it is a case of thinning in forest environments such as dense young forest.

Forestry machines of this type, therefore, have the task of proceeding through younger forestry stands and of processing and collecting a certain young forest, taking its properties into consideration, in order to give the maximal growth for the remaining, thinned or cleared forest. The tree harvester unit, which is of the type known as "single-grip", comprises a cutting device, which carries out the sawing of a standing tree, and grip arms that retain the tree at the harvester until the tree is placed at the desired location, which - depending on the properties of the tree - may be directly onto the ground or into the load compartment of the work machine.

Certain trees in a stand are processed during clearing and thinning forestry operations, while certain pre-determined parts are allowed to remain. Thinning is carried out relatively frequently, and a coniferous forest stand may be thinned 3-4 times before it is cleared. The actual clearing and thinning processes have long been considered within the forestry industry to constitute the processing stages that - while being necessary to achieve high return at the final clearance - when considered as processing stages have long been associated with high capital costs and low speed of removal, i.e. a low overall productivity, even if a certain portion of the stand can be used for profitable timber. It has proved to be appropriate to use simple, lightweight forestry machines during thinning, due to the density of the forestry stand. The driver normally sits facing forward in the direction of travel of the forestry machine in such machines. Most of the harvesting work takes place with the tree harvester unit within a working area that is, in practice, located at a certain radial distance from the harvester, immediately in front of the harvester or only somewhat to the side of it. The harvesting work is normally carried out at a radial distance from the forestry machine that has been selected such that the operator can, by operation of the crane, meet and capture a falling tree in a safe manner when the tree pivots from its vertical rooted position to the lying horizontal position in which processing of the tree takes place. In order to carry out this manoeuvre with the crane, a certain free space is, of course, required, the extent of which is assessed by an experienced operator from case to case, based on, for example, the thickness and height of the tree in question.

One disadvantage with known forestry harvesters is their limited capacity, in particular with respect to the tree harvester unit that - when regarded as a unit - is relatively expensive, and that in these machines is used not only for the driving and cross-cutting stage (felling, trimming, and cutting to pre-determined lengths) but also, with the aid of the relatively simple timber gripper with which the tree harvester is equipped, for loading of the processed forest material onto the mobile load carrier of the work machine. The tree harvester unit is manoeuvred into its working position by being displaced not only by means of the crane, but also by means of the machine. The tree harvester unit has a working area during tree felling that, with respect to the longitudinal axis of the machine, extends in practice around the arc of a circle with an arc extent of approximately 180°, in an area in front of and to the side of the machine. As has been mentioned above, "practical working area" denotes the region within which the operator assesses it to be appropriate and safe to place the tree harvester unit relative to the forestry machine in order to meet and capture a falling tree with the crane.

A loading system for forest machine is known from document WO-A-2010/002349.

There is a desire to be able to increase the degree of exploitation of the harvester, in particular during thinning and clearing. This primarily relates in this case to increasing the capacity of the harvester by increasing the fraction of the total operating time that the tree harvester unit is used for the operations for which the unit is suitable, namely the harvesting and processing of trees.

The purpose of the present invention is to provide a mobile loading system for a forest harvester of the type described above that contributes to improved capacity, in particular with respect to increasing the degree of exploitation of the tree harvester unit, which - when regarded as a unit - is relatively expensive.

This purpose of the invention is achieved through a mobile loading system for forest harvesters that demonstrates the distinctive features and characteristics specified in claim 1, and a loading procedures that is specified in claim 12. Further advantages of the invention are made clear by the non-independent claims.

Due to the mobile loading system for a forest harvester according to the invention, the number of displacements in order to achieve tree processing and the placing of the trees in the load carrier using the expensive tree harvester unit will become considerably lower than previously, which means that the degree of exploitation of the said type of simple forest harvester can be considerably improved.

Furthermore, the advantage is obtained that it is not necessary to store the timber on the ground, due to the direct-loading system of the invention. The loading operation can be carried out in a single stage instead of in several sub-stages, which increases the availability of the tree harvester unit of the forestry machine. One particularly interesting distinctive feature of the present invention is that it is the timber receiver that is brought forward to the tree harvester unit, when this is located having been manoeuvred into a working position in the practical working area for tree felling, and that after the reception of timber is removed away from the working area for the delivery of timber to the mobile load compartment. As a consequence of this, it is not necessary for the tree harvester unit itself to carry timber using its trivial timber gripper, nor is it necessary for it to leave the practical working area in front of the harvester, which contributes to the efficiency of the present mobile loading system. To put it briefly, the timber receiver is displaced after the reception of timber from the tree harvester unit away from the practical working area to the mobile load compartment, independently of the tree harvester unit. Thus, the tree harvester unit can be active in harvesting within its working area, without needing to carry out unnecessary displacements that are related to anything other than harvesting.

The invention will be described in more detail below with reference to the attached drawings, of which:

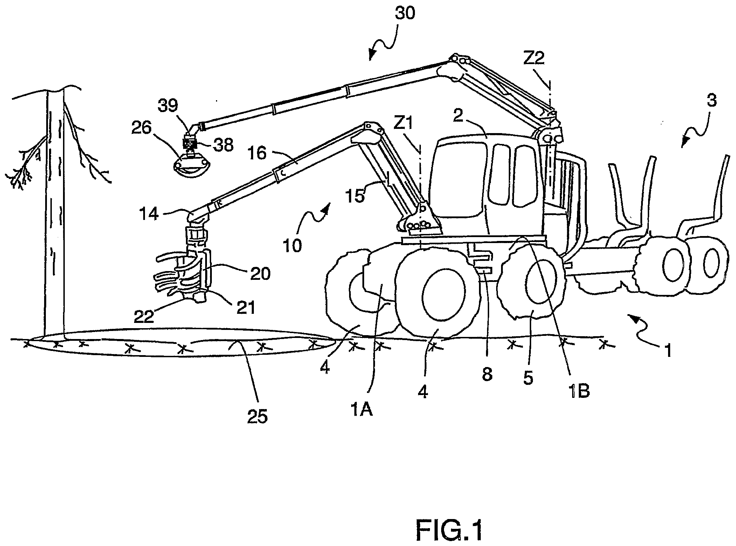

Figure 1 shows a perspective view of a mobile loading system for a harvester that has, in accordance with the invention, a loading arrangement that can receive a log directly from the tree harvester unit in a working area in a sector of a circle in front of the harvester and retain it and, independently of the motion of the tree harvester unit carry out displacement of a delivered log to a position in and above the said mobile load compartment for the delivery of one or several logs,

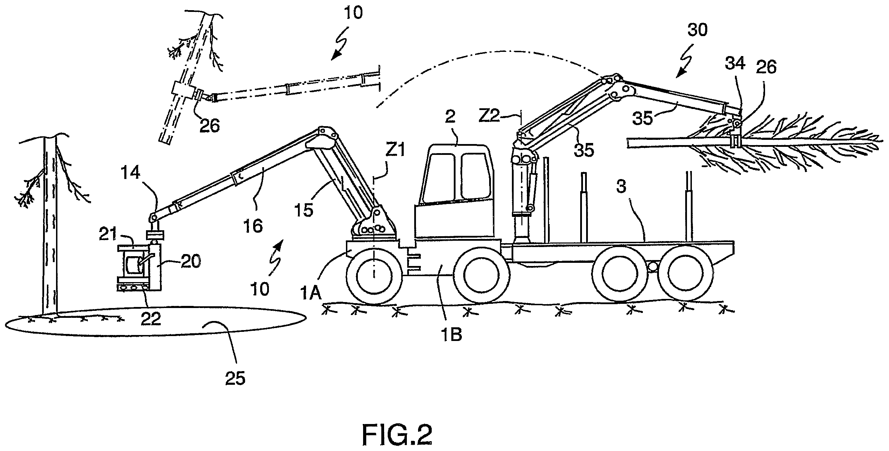

Figure 2 shows a side view of a harvester in the process of cross-cutting and sawing a felled tree to form logs, and where a loading arrangement according to the invention that uses a timber gripper meets and receives timber from the tree harvester unit in a sector of a circle of the practical working area in front of the harvester,

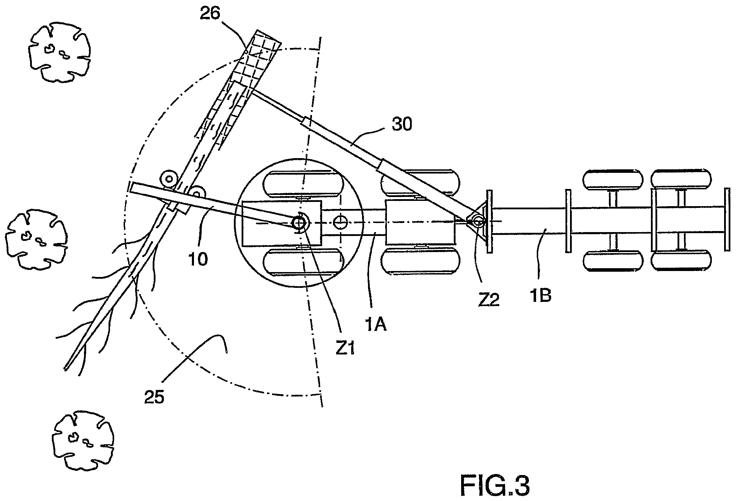

Figure 3 shows a view from above of a harvester in the process of cross cutting and sawing a felled tree to form logs, and where a loading arrangement according to the invention that uses an extended collector meets and receives timber from the tree harvester unit in a sector of a circle of a working area in front of the harvester,

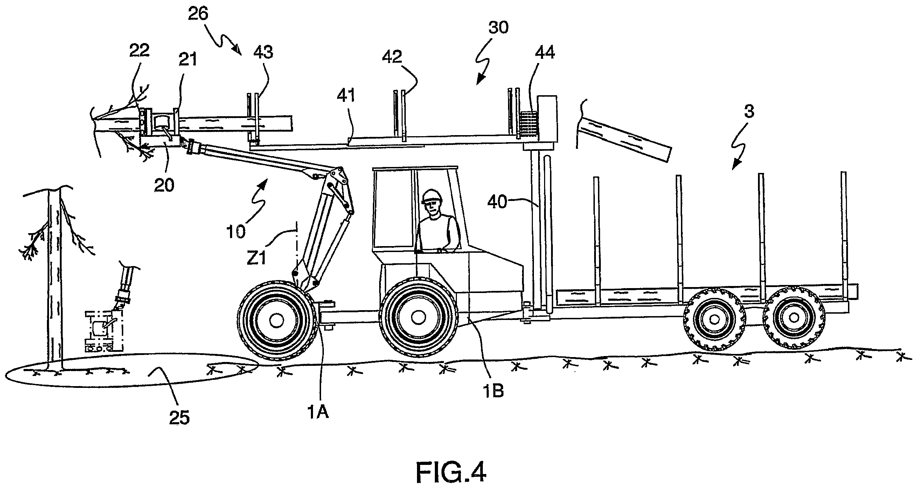

Figure 4 shows a side view of a mobile loading system for a harvester in an alternative second embodiment and that, according to the invention, has a loading arrangement that can receive a log directly from the tree harvester unit in a working area in front of the harvester and retain it and, independently of the motion of the tree harvester unit, carry out displacement of a delivered log to a position in and above the said mobile load compartment.

Reference number 1 in the drawings generally denotes the chassis or frame of a forestry machine in the form of a harvester of wheeled type that is normally used during the thinning of young forest. The harvester includes a driver's cabin 2 and a mobile load compartment 3 in the form of a wheeled truck that is connected in a jointed manner to the harvester and intended to be drawn along after it. The load compartment of the truck is limited by banks, such as a bottom and stakes set in pairs to form two opposing sides. The chassis 1 in the example shown is supported by four pairs of wheels 4, 5 of which two front wheels 4, 5 located on the same side are arranged on common pendular arms in the formation of bogies that can be individually pivoted relative to the chassis.

The harvester 1 is an articulated-frame harvester, i.e. it demonstrates a chassis that consists of a front assembly 1A and a rear assembly 1B that are united by a joint 8 in a manner that allows pivoting. The chassis 1 supports in a conventional manner a drive unit that is not shown in detail. The front assembly 1A of the chassis supports a crane 10 that is mounted in bearings at a turntable 12 on the front assembly for rotation in a horizontal plane around a vertical axis Z1. A tree processing unit is suspended from the tip of the crane, which unit in this case is constituted by a conventional harvester unit with arrangements for felling, gripping and displacement. As has been described in the introduction and shown in Figure 3, the tree harvester unit has a practical working area that extends with respect to the longitudinal axis of the machine approximately 180° in front of and at the side of the machine, a certain distance radially out from the machine and within which area the tree harvester is manoeuvred to its working position by being displaced not only by means of the crane but also by means of the machine. Thus, the term "practical working area" denotes, in the following, the region described above and generally the sector within which it is practically possible to carry out tree felling. This means in practice that the tip 14 of the crane and a harvester unit suspended from it can essentially fell and process trees only in working positions in front of the harvester and at the side of it. The harvesting work is normally carried out within a practical working area at a radial distance from the forestry machine that has been selected such that the operator can, by operation of the crane, meet and capture a falling tree in a safe manner when the tree pivots from its vertical rooted position to the lying horizontal position in which processing of the tree takes place.

The crane 10 that is supported by the front assembly 1A comprises a lifting boom 15 and an outer boom 16 that are united to each other in a jointed manner through a joint and link arrangement, such that it is possible for the tip of the outer arm to carry out motion in space. The lifting boom 15 can be pivoted through a link and joint arrangement in a horizontal plane relative to the chassis around the above-mentioned vertical axis Z1. The outer boom 16 has a telescopic construction with two arm sections that can slide one into the other, consisting of an inner and an outer arm section in the longitudinal direction. Inwards and outwards displacement of the outer arm section of the outer boom 16 is achieved by means of a double-action piston and cylinder means that is integral to the two arm sections designed as boxes (not shown in the drawings). The outer boom part 16 supports at its forward free end a harvester unit 20 that comprises a gripper 21 and a cutting arrangement 22. A rotator 23 and the required tilt arrangement 24 are arranged between the free end of the outer boom 16 and the harvester unit 20, such that the harvester unit can carry out the necessary operations, and achieve a desired pattern of motion, similar to that of a joint. The harvester unit 20 comprises in known manner trimmers and feed rollers. The harvester unit 20 is displaced between trees with the aid of the crane 10 and the vehicle. The expression "harvester unit" below should not be understood as limiting for the invention. In the cases in which complete trunks or complete trees are processed, it is, of course, conceivable to replace the harvester unit with any suitable tree processing arrangement at all, such as a simple single-grip felling head without any processing equipment or a harvester arrangement for multi-tree processing and the temporary storage of tree trunks.

The free area around the harvester is normally very limited, in particular in relatively young, and consequently dense, forestry stands. This makes it difficult to handle and transfer processed trees from a working area 25 in front of the vehicle, in the angular range in which the harvester is operating and from which the tree has been collected, to a rear deposit position above the load compartment 3 in the truck, whereby the tree is delivered to the said load compartment by being released down into it. According to the invention, there is arranged at the mobile load compartment 3 a loading arrangement that has been designed to carry out the loading of forestry raw material such as logs into the load compartment 3, where the said timber has been collected by a timber receiver or forestry raw material receiver 26 from a working position for tree felling in a sector of a circle of the working area 25 in front of the harvester. It is appropriate that it is possible to manoeuvre the timber receiver 26, after reception of timber, back, or that it should return to, a deposit position above the load compartment 3 along the same pathway as was used to manoeuvre it into the desired position within the working area 25.

A loading system according to the present invention is arranged as a hydraulically driven arrangement at the truck 3 that demonstrates a timber receiver 26 with the ability to receive timber that is delivered from the harvester unit 20, after having been cut into lengths. The loading system can be operated either manually or automatically from the driver's cabin 2 using control means, and it is appropriate that it is driven by the engine of the harvester. The technology of operating hydraulically driven machines such that they follow a pre-determined pattern of motion through a control program and mathematical curves, i.e. as a robot, has been known for a long time. It in normal that the standardised CAN-system (where "CAN" is an acronym for "Controller Area Network") is used, which system is computer-based and uses an electrical control and monitoring system with a low-level protocol for nodes and modules, whereby communication between the units that are components of the hydraulic system takes place over bus-based connections. Since this technology for programmable hydraulic operation is well known, it will not be described in detail.

The loading system is shown in Figures 1 and 2 in a first embodiment that makes it possible to receive and transfer a processed tree from a harvester unit, using a tree receiver 26 in the form of a conventional timber gripper. The timber is received at a collection position with a working area in front of the harvester and it is transferred along a pathway over the harvester to a deposit position above the load compartment 3. In other words, the transfer can take place without deviating in a sideways direction from a pathway that is parallel to the longitudinal axis of the harvester, and that is essentially constrained within the transverse extent of the forwarder, see Figure 3.

The loading system in this first embodiment comprises an arrangement with a loading arrangement 30 that is mounted in bearings via a turntable such that it can rotate at a forward gable end of the truck that is drawn by the harvester and that demonstrates a load compartment 3. The loading arrangement 30 is mounted to rotate in a horizontal plane around a vertical axis Z2. The loading arrangement 30 can rotate in a full circle, i.e. it demonstrates an angular rotation that amounts to 360°, which means that the loading arrangement and its tip 34 reach positions not only in a working zone immediately in front of the harvester, but also positions above the harvester and positions above the load carrier. The loading arrangement 30 comprises a lifting boom 35 and an outer boom 36 that are united to each other in a jointed manner through a joint and link arrangement, such that it is possible for the tip of the outer arm to carry out the required working motion. The lifting boom 35 can be rotated through a link and joint arrangement in a horizontal plane relative to the chassis around the above-mentioned vertical axis Z2. The outer boom 36 has a telescopic construction with at least two arm sections that can slide one into the other, consisting of an inner and an outer arm section in the longitudinal direction such that the free end 34 of the arm reaches positions in front of the forwarder within the working area 25. Inwards and outwards displacement of the outer arm section of the outer boom 36 is achieved by means of a double-action piston and cylinder means that is integral to the two arm sections designed as boxes (not shown in the drawings). The outer boom section 36 supports at its forward free end a means 26 with which it is possible to receive timber that has been delivered from the harvester unit 20, cut into lengths. In this case, the timber receiver 26 is constituted by a timber gripper that can grip a standing tree at the same time as the harvester unit 20. A rotator 38 and the required tilt arrangement 39 are arranged between the free end of the outer boom and the timber gripper, such that the gripper can carry out the necessary operations, and achieve a desired pattern of motion, similar to that of a joint, when handling timber.

The harvester is shown in Figure 3 in the process of cross cutting and sawing a tree into logs, whereby the tree receiver 26 comprises an extended collector that meets and receives timber from the harvester unit 20 within a sector of a circle of a working area 25 in front of the harvester. As the logs are sawn off at the desired lengths and fed out from the harvester unit 20, they are collected in the collector placed within the working area 25. The tree receiver 26 is placed with the aid of the loading arrangement 30 at a desired position within the working area of the harvester unit 25 in front of the harvester. The logs that have been collected in the tree receiver 26 can, by operation of the loading arrangement 30, be transferred, either individually or several at one time, to a position above the load carrier 3, at which position they are released or tipped down.

The present loading system 30 is shown in Figure 4 in a second design whereby the loading arrangement described above and part of the arrangement has been replaced by a vertical frame 40 that is placed at a forward gable end of the truck and that supports a track 41 with a length of protrusion that can be changed telescopically. The track 41 extends in a horizontal plane in the normal direction of travel of the harvester forwards above the cabin 2 and it reaches, at least when it is in its extended position, a significant distance into the practical working area 25 for tree felling of the harvester unit. A number of compressive stakes 42 are arranged in pairs on both sides of the track 41 as a timber receiver 26, where these pairs of stakes are evenly distributed along the length of the track. A timber gripper 43 is located at the farthest end of the track and at the rear of the track, at the end that faces the load carrier 3, there are arranged pairwise operating feeder rollers 44 , with the aid of which rollers the timber is fed along its longitudinal direction and thus also along the longitudinal direction of the harvester down into the load carrier 3. The harvester unit 20 and a tree that has been placed into it are manoeuvred with the aid of the crane 10 to the desired location in connection with the loading arrangement such that logs can be received by their being fed up onto the track 41 as they are sawn off into the desired lengths. Through interaction between the timber gripper 43, the track 41 that has been pushed together and the rollers 44, the logs are fed along the longitudinal axis of the harvester down into the load compartment 3.

The present invention is not limited to that which has been described above and shown in the drawings: it can be changed and modified in several different ways within the scope of the innovative concept defined by the attached patent claims. Thus, it is conceivable within the framework of the invention that the present loading system with its associated mobile load compartment, similar to the harwarder that was described in the introduction and that demonstrates a load compartment that can be rotated and tilted directly on the rear assembly, could be arranged to immediately on the harvester and not necessarily on a truck that can be coupled to it.

## Claims

1. A mobile load compartment (3) for trunks or timber that has been obtained during harvesting of trees comprising a harvester that supports a driver's cabin (2) on a wheeled chassis (1), a crane (10) that can be rotated around a vertical axis (Z1) on the chassis and that supports at the tip of the crane a tree-processing device (20) for tree felling and the production of forestry raw material, that may comprise timber, a loading arrangement (30) arranged at said mobile load compartment including a unit (26) for the reception of forestry raw material and for supporting the raw material in a retaining manner and transferring it to the load compartment,
**characterised in that** the loading arrangement (30) is arranged to directly receive the forestry raw material that has been produced from the tree-processing device and support it in a retaining manner and, and independently of the motion of the tree-processing device, carry out displacement of the delivered forestry raw material using the crane to a position in and above the said mobile load compartment (3), **characterised in that** the loading arrangement (30) is arranged with such a range and ability of motion that it allows the receiver (26) to be manoeuvred to a position within a practical working area during tree felling that extends with respect to the longitudinal axis of the harvester around an arc extent of approximately 180° in front of and at the side of the harvester and to be present in the said region during the reception of the raw material.

2. The mobile load compartment according to claim 1, whereby the loading arrangement (30) is, when viewed in the longitudinal direction of the harvester, located between the crane (10) that supports the tree-processing device (20) and the load compartment (3).

3. The mobile load compartment according to claim 1, whereby the mobile load compartment (3) forms a part of a truck arranged at the harvester.

4. The mobile load compartment according to any one of claims 1-2, whereby the mobile load compartment (3) is arranged in the rear part of the harvester when seen in its normal direction of travel, as, for example, a part of a wheeled truck that can be coupled and that is intended to be drawn after the harvester, or arranged as a compartment supported immediately on the chassis (1) of the harvester.

5. The mobile load compartment according to any one of claims 1-4, whereby the loading arrangement (30) is arranged to displace the raw material from the reception of the forestry raw material at that part of the practical working area (25) along a pathway that is essentially parallel to the longitudinal axis of the harvester and further backwards towards the load compartment (3).

6. The mobile load compartment according to claim 1 or 5, whereby the pathway of the loading arrangement (30) for the displacement of the forestry raw material is arranged to extend over the driver's cabin (2).

7. The mobile load compartment according to any one of claims 1-6, whereby the loading arrangement (30) comprises a crane (30) arranged at the load compartment, which crane can be rotated around a vertical axis (Z2) for rotation in a horizontal plane, and which crane supports the receiver (26) for the forestry raw material at its free end.

8. The mobile load compartment according to claim 7, whereby the receiver (26) for the forestry raw material comprises any one of the following devices: a timber gripper or an extended collector with the ability to receive cross-cut forestry raw material in the form of timber, a collector track (41) for the feed of trunks or timber that extends over the driver's cabin (2) when seen in the longitudinal direction of the harvester.

9. The mobile load compartment according to claim 7, whereby the loading arrangement (30) that is a component of the loading system has been designed with such a range from the harvester that it reaches within essentially the complete practical working area (25) of the tree processing device in front of the harvester.

10. The mobile load compartment according to any one of claims 1-9, whereby the loading system (30) with the receiver (26) for forestry raw material is arranged such that it can be manoeuvred manually or automatically from the driver's cabin (2) using control means, and in that the system, when set to use automatic operation, allows the receiver (26) for forestry raw material to transfer within the practical working area (25) the raw material that has been received back to a deposit position above the load compartment (3) following a pre-determined pattern of motion via a control program that may include, but does not necessarily include, a CAN system.

11. The mobile load compartment according to any one of claims 8 or 9, whereby the receiver (26) for forestry raw material is suspended at the free end of the loading arrangement (30) that is a component of the loading system via a rotator (38) and a tilt arrangement (39) in order to offer the receiver a pattern of motion that is similar to that of a joint during the handling of raw material that has been received within the practical working area (25) to the load compartment (3).

12. A procedure for a harvester with a mobile load compartment (3), in particular during the harvesting of forest, **characterised in that** it includes the following steps:
a) that a tree is felled (11) by means of a tree-processing device (20) that is a component of the harvester;
b) that a receiver (26) for tree trunks or timber is placed within the practical working area (25) of the tree processing device during tree felling that extends with respect to the longitudinal axis of the harvester around an arc extent of approximately 180° in front of and at the side of the harvester
c) that the tree is cross cut and sawn to timber by means of the harvester unit (20);
d) that the sawn timber is fed out from the harvester unit (20) directly to the receiver (26) that is located within the practical working area;
and
e) that the receiver (26) is displaced from the practical working area (25) to a position from which the received trunks or timber can be lain or tipped into the said mobile load compartment (3); and
f) that the displacement of the receiver (26) away from the practical working area (25) to the mobile load compartment (3) takes place independently of the tree harvester unit (20).

13. The procedure according to claim 12, whereby step (b) is carried out before step (a).

## Patentansprüche

1. Mobiler Laderaum (3) für Baumstämme oder Bauholz, das während des Erntens von Bäumen erhalten wurde, umfassend eine forstwirtschaftliche Erntemaschine, die ein Fahrerhaus (2) auf einem mit Rädern versehenen Fahrgestell (1) trägt, sowie einen Kran (10), der sich um eine vertikale Achse (Z1) auf dem Fahrgestell drehen lässt, und der oben am Kran eine baumverarbeitende Vorrichtung (20) zum Einschlagen von Bäumen und die Produktion von Forstrohstoffen trägt, die Bauholz umfassen kann, wobei eine Ladeanordnung (30) an diesem mobilen Laderaum angeordnet ist, einschließlich einer Einheit (26) zur Aufnahme von Forstrohstoffen und zum Tragen der Rohstoffe in einer rückhaltenden Weise und deren Transfer in den Laderaum,
**dadurch gekennzeichnet, dass** die Ladeanordnung (30) so angeordnet ist, dass sie die Forstrohstoffe, die von der baumverarbeitenden Vorrichtung produziert wurden, direkt empfängt und sie in einer rückhaltenden Weise trägt, und unabhängig von der Bewegung der baumverarbeitenden Vorrichtung, das Verlagern der gelieferten Forstrohstoffe mit dem Kran in eine Position in und über diesem mobilen Laderaum (3) durchführt,
**dadurch gekennzeichnet, dass** die Ladeanordnung (30) mit einer solchen Reichweite und einer solchen Bewegungsfähigkeit angeordnet ist, dass sie es der Aufnahme (26) ermöglicht, während des Einschlagens von Bäumen in eine Position im praktischen Arbeitsbereich manövriert zu werden, der sich in Bezug auf die Längsachse der forstwirtschaftlichen Erntemaschine um ein Bogenmaß von ca. 180° vor und seitlich von der forstwirtschaftlichen Erntemaschine erstreckt, und während der Aufnahme der Rohstoffe in diesem Bereich zugegen zu sein.

2. Mobiler Laderaum nach Anspruch 1, wobei sich die Ladeanordnung (30) bei Betrachtung in Längsrichtung der forstwirtschaftlichen Erntemaschine zwischen dem Kran (10), der die baumverarbeitende Vorrichtung (20) trägt, und dem Laderaum (3) befindet.

3. Mobiler Laderaum nach Anspruch 1, wobei der mobile Laderaum (3) einen Teil eines LKW bildet, der an der forstwirtschaftlichen Erntemaschine angeordnet ist.

4. Mobiler Laderaum nach einem der Ansprüche 1 bis 2, wobei der mobile Laderaum (3) im hinteren Teil der forstwirtschaftlichen Erntemaschine angeordnet ist, bei Sicht in normaler Fahrtrichtung, beispielsweise als Teil eines mit Rädern versehenen LKW, der an die forstwirtschaftliche Erntemaschine gekoppelt und dazu vorgesehen ist, hinter der forstwirtschaftlichen Erntemaschine hergezogen zu werden, oder der als Raum angeordnet ist, der vom Fahrgestell (1) der forstwirtschaftlichen Erntemaschine getragen wird.

5. Mobiler Laderaum nach einem der Ansprüche 1 bis 4, wobei die Ladeanordnung (30) dergestalt angeordnet ist, dass die Rohstoffe aus der Aufnahme für die Forstrohstoffe in dem Teil des praktischen Arbeitsbereichs (25) entlang eines Pfades verlagert werden, der im Wesentlichen parallel zur Längsachse der forstwirtschaftlichen Erntemaschine ist, sowie weiter nach hinten, in Richtung des Laderaums (3).

6. Mobiler Laderaum nach Anspruch 1 oder 5, wobei der Pfad der Ladeanordnung (30) für das Verlagern der Forstrohstoffe so angeordnet ist, dass er sich über dem Fahrerhaus (2) erstreckt.

7. Mobiler Laderaum nach einem der Ansprüche 1 bis 6, wobei die Ladeanordnung (30) einen Kran (30) umfasst, der am Laderaum angeordnet ist, dessen Kran sich zur Rotation in einer horizontalen Ebene um eine vertikale Achse (Z2) drehen lässt, und dessen Kran die Aufnahme (26) für die Forstrohstoffe an seinem freien Ende trägt.

8. Mobiler Laderaum nach Anspruch 7, wobei die Aufnahme (26) für die Forstrohstoffe eine der folgenden Vorrichtungen umfasst: einen Bauholzgreifer oder einen verlängerten Sammler mit der Fähigkeit, quer geschnittene Forstrohstoffe in Form von Bauholz aufzunehmen, eine Aufnahmespur (41) für die Zufuhr von Baumstämmen oder Bauholz, welche sich in Längsrichtung der forstwirtschaftlichen Erntemaschine gesehen über dem Fahrerhaus (2) erstreckt.

9. Mobiler Laderaum nach Anspruch 7, wobei die Ladeanordnung (30), die eine Komponente des Ladesystems ist, mit einer solchen Reichweite von der forstwirtschaftlichen Erntemaschine ausgelegt ist, dass sie sich bis in den im Wesentlichen vollständigen praktischen Arbeitsbereich (25) der baumverarbeitenden Vorrichtung der forstwirtschaftlichen Erntemaschine erstreckt.

10. Mobiler Laderaum nach einem der Ansprüche 1 bis 9, wobei das Ladesystem (30) mit der Aufnahme (26) für Forstrohstoffe so angeordnet ist, dass es sich manuell oder automatisch unter Verwendung von Steuermitteln aus dem Fahrerhaus (2) manövrieren lässt, und wobei das System, wenn es auf die Anwendung des Automatikbetriebes festgelegt ist, es der Aufnahme (26) für Forstrohstoffe ermöglicht, Forstrohstoffe, die in einer Depotposition über dem Laderaum (3) rückempfangen wurden, innerhalb des praktischen Arbeitsbereichs (25) nach einem vordefinierten Muster über ein Steuerprogramm, das ein CAN-System einschließen kann, jedoch nicht notwendigerweise muss, zu transferieren.

11. Mobiler Laderaum nach einem der Ansprüche 8 oder 9, wobei die Aufnahme (26) für Forstrohstoffe am freien Ende der Ladeanordnung (30) aufgehängt ist, die eine Komponente des Ladesystems ist, über eine Dreh- (38) und Kippanordnung (39), um der Aufnahme ein Bewegungsmuster zu bieten, das ähnlich dem einer Verbindung während der Handhabung der Rohstoffe ist, und das innerhalb des praktischen Arbeitsbereichs (25) am Laderaum (3) empfangen wurde.

12. Verfahren für eine forstwirtschaftliche Erntemaschine mit einem mobilen Laderaum (3), insbesondere während des Einschlagens von Wald, **dadurch gekennzeichnet, dass** es die folgenden Schritte einschließt:
a) ein Baum wird mithilfe einer baumverarbeitenden Vorrichtung (20) eingeschlagen (11), die eine Komponente der forstwirtschaftlichen Erntemaschine ist;
b) eine Aufnahme (26) für Baumstämme oder Bauholz wird während des Einschlagens von Bäumen im praktischen Arbeitsbereich (25) der baumverarbeitenden Vorrichtung platziert, der sich in Bezug auf die Längsachse der forstwirtschaftlichen Erntemaschine um ein Bogenmaß von ca. 180° vor dem und seitlich von der forstwirtschaftlichen Erntemaschine erstreckt;
c) der Baum wird mithilfe der forstwirtschaftlichen Erntemaschineneinheit (20) quer durchgeschnitten und zu Bauholz zersägt;
d) das zersägte Schnittholz wird von der forstwirtschaftlichen Erntemaschineneinheit (20) direkt an die Aufnahme (26) ausgegeben, die sich innerhalb des praktischen Arbeitsbereichs befindet;
und
e) die Aufnahme (26) wird vom praktischen Arbeitsbereich (25) in eine Position versetzt, in der die empfangenen Baumstämme oder das empfangene Bauholz in den mobilen Laderaum (3) gelegt oder gekippt werden kann; und
f) das Verlagern der Aufnahme (26) aus dem praktischen Arbeitsbereich (25) zum mobilen Laderaum (3) erfolgt unabhängig von der forstwirtschaftlichen Baumerntemaschine (20).

13. Verfahren nach Anspruch 12, wobei Schritt (b) vor Schritt (a) ausgeführt wird.

## Revendications

1. Compartiment de chargement mobile (3) pour troncs ou bois qui a été obtenu lors de la récolte d'arbres comprenant une machine de récolte qui supporte une cabine de conduite (2) sur un châssis à roues (1), une grue (10) pouvant être mise en rotation autour d'un axe vertical (Z1) sur le châssis et qui supporte à la pointe de la grue, un dispositif de traitement d'arbres (20) pour l'abattage des arbres et la production de matière brute forestière, qui peut comprendre le bois, un dispositif de chargement (30) disposé au niveau dudit compartiment de chargement mobile comprenant une unité (26) pour la réception de matière brute forestière pour supporter la matière première d'une manière de retenue et son transfert vers le compartiment de chargement, **caractérisé en ce que** le dispositif de chargement (30) est agencé pour recevoir directement la matière brute forestière qui a été produite à partir du dispositif de traitement d'arbres et pour la supporter d'une manière de retenue, et indépendamment du mouvement du dispositif de traitement d'arbres, pour effectuer le déplacement de la matière brute forestière délivrée à l'aide de la grue jusqu'à une position à l'intérieur et au-dessus dudit compartiment de chargement (3), **caractérisé en ce que** le dispositif de chargement (30) est pourvu d'une telle plage et capacité de mouvement qu'il permet au récepteur (26) d'être manoeuvré vers une position à l'intérieur d'une zone de travail pratique au cours de l'abattage des arbres qui s'étend par rapport à l'axe longitudinal de la machine de récolte autour d'un point d'arc d'environ 180° à l'avant et au côté de la machine de récolte et d'être présent dans ladite zone lors de la réception de la matière brute.

2. Compartiment de chargement mobile selon la revendication 1, dans lequel le dispositif de chargement (30) est, vu dans la direction longitudinale de la machine de récolte, situé entre la grue (10) qui supporte le dispositif de traitement d'arbres (20) et le compartiment de chargement (3).

3. Compartiment de chargement mobile selon la revendication 1, dans lequel le compartiment de chargement mobile (3) forme une partie d'un chariot disposé sur la machine de récolte.

4. Compartiment de chargement mobile selon l'une quelconque des revendications 1 à 2, dans lequel le compartiment de chargement mobile (3) est disposé dans la partie arrière de la machine de récolte, vue dans sa direction normale de voyage, comme par exemple une partie d'un chariot à roues qui peut être couplé et qui est destiné à être tiré après la machine de récolte, ou disposé en tant que compartiment supporté immédiatement sur le châssis (1) de la machine de récolte.

5. Compartiment de chargement mobile selon l'une quelconque des revendications 1 à 4, dans lequel le dispositif de chargement (30) est agencé pour déplacer la matière brute à partir de la réception de la matière brute forestière à la partie de la zone de travail pratique (25) le long d'un trajet qui est essentiellement parallèle à l'axe longitudinal de la machine de récolte et davantage en arrière vers le compartiment de chargement (3).

6. Compartiment de chargement mobile selon la revendication 1 ou 5, dans lequel le trajet du dispositif de chargement (30) pour le déplacement de la matière brute forestière est agencé de manière à s'étendre au-dessus de la cabine de conduite (2).

7. Compartiment de chargement mobile selon l'une quelconque des revendications 1 à 6, dans lequel le dispositif de chargement (30) comprend une grue (30) disposée au niveau du compartiment de chargement, ladite grue pouvant être mise en rotation autour d'un axe vertical (Z2) pour la rotation dans un plan horizontal, et ladite grue supportant le récepteur (26) pour la matière brute forestière à son extrémité libre.

8. Compartiment de chargement mobile selon la revendication 7, dans lequel le récepteur (26) pour la matière brute forestière comprend l'un quelconque des dispositifs suivants: une pince de bois ou un collecteur prolongé avec la capacité de recevoir la matière brute forestière coupée transversalement sous forme de bois, une piste de collecteur (41) destinée à l'alimentation de troncs ou de bois qui s'étend au-dessus de la cabine de conduite (2), vue dans la direction longitudinale de la machine de récolte.

9. Compartiment de chargement mobile selon la revendication 7, dans lequel le dispositif de chargement (30) qui est un composant du système de chargement est conçu avec une telle plage de la machine de récolte qu'il s'étend à l'intérieur de pratiquement toute la zone de travail pratique (25) du dispositif de traitement d'arbres en face de la machine de récolte.

10. Compartiment de chargement mobile selon l'une quelconque des revendications 1 à 9, dans lequel le système de chargement (30) avec le récepteur (26) pour la matière brute forestière est disposé si bien qu'il peut être manoeuvré manuellement ou automatiquement à partir de la cabine de conduite (2) à l'aide de moyens de commande, et en ce que le système, lorsqu'il est configuré pour utiliser le mode automatique, permet au récepteur (26) pour la matière brute forestière de transférer dans la zone de travail pratique (25) la matière brute qui a été reçue à une position de dépôt au-dessus du compartiment de chargement (3) suivant un schéma prédéterminé de mouvement par l'intermédiaire d'un programme de commande qui peut inclure, mais ne comprend pas nécessairement, un système CAN.

11. Compartiment de chargement mobile selon l'une quelconque des revendications 8 ou 9, dans lequel le récepteur (26) pour la matière brute forestière est suspendu à l'extrémité libre du dispositif de chargement (30) qui est un composant du système de chargement par l'intermédiaire d'un dispositif de rotation (38) et d'un dispositif d'inclinaison (39) afin d'offrir au récepteur un modèle de mouvement qui est similaire à celui d'un joint lors de la manipulation de la matière brute qui a été reçue à l'intérieur de la zone de travail pratique (25) vers le compartiment de chargement (3).

12. Procédure pour une machine de récolte avec un compartiment de chargement mobile (3), en particulier lors de la récolte de bois, **caractérisée en ce qu**'elle comprend des étapes consistant à:
a) ce qu'un arbre est coupé (11) au moyen d'un dispositif de traitement d'arbres (20) qui est un composant de la machine de récolte;
b) ce qu'un récepteur (26) pour les troncs d'arbres ou de bois est placé dans la zone de travail pratique (25) du dispositif de traitement d'arbres lors de l'abattage des arbres qui s'étend par rapport à l'axe longitudinal de la machine de récolte autour d'un point d'arc d'environ 180° à l'avant et au côté de la machine de récolte;
c) ce que l'arbre est coupé en coupe transversale et scié en bois au moyen de l'unité de récolte (20);
d) ce que le bois de sciage est alimenté à partir de l'unité de récolte (20) directement au récepteur (26) qui est situé à l'intérieur de la zone de travail pratique;
et
e) ce que le récepteur (26) est déplacé de la zone de travail pratique (25) vers une position à partir de laquelle les troncs ou bois reçus peuvent être posés ou basculés dans ledit compartiment de chargement mobile (3); et
f) ce que le déplacement du récepteur (26) à l'écart de la zone de travail pratique (25) vers le compartiment de chargement mobile (3) se fait indépendamment de l'unité de récolte d'arbres (20).

13. Procédure selon la revendication 12, dans laquelle l'étape (b) est effectuée avant l'étape (a).
